# EUROPEAN PATENT APPLICATION

(11) **EP 4 579 794 A1**
(43) Date of publication of application: **02.07.2025**
(21) Application number: 24222062.2
(22) Date of filing: 20.12.2024
(51) Int. Cl.: H01M 4/136, H01M 4/36, H01M 4/131, H01M 4/58, H01M 10/0525, H01M 4/02

(54) **POSITIVE ELECTRODE SHEET, SECONDARY BATTERY, BATTERY PACK AND ELECTRICAL EQUIPMENT**

(30) Priority: 28.12.2023 CN 202311845711
(71) Applicant: Hithium Tech HK Limited, Hong Kong (HK)
(72) Inventor: HE, Wei, Xiamen 361100 (CN)
(74) Representative: RGTH

(57) **Abstract**

The present application provides a positive electrode sheet, a secondary battery, a battery pack and an electricity-consumption equipment. The positive electrode sheet includes a positive current collector. At least one surface of the positive current collector is provided with a positive active material layer. In any 25µm×25µm region of a cross section of the positive active material layer, a percentage of an area of a first positive active material with a cracked structure to a total area of the region is *a* %, 5≤*a*≤20.

## Description

### TECHNICAL FIELD

The present application relates to the technical field of electrochemistry, in particular, to a positive electrode sheet, a secondary battery, a battery pack and an electricity-consumption equipment.

### BACKGROUND

Secondary batteries (e.g., lithium-ion batteries) have advantages of high energy density, small self-discharge, long cycle life, and the like, and thus are widely used in the fields of energy storage devices and the like.

### SUMMARY

In a first aspect, the present application provides a positive electrode sheet. The positive electrode sheet comprises a positive current collector. At least one surface of the positive current collector is provided with a positive active material layer. In any 25µm×25µm region of a cross section of the positive active material layer, a percentage of an area of a first positive active material with a cracked structure to a total area of the region is *α* %, 5≤*α*≤20.

In a second aspect, the present application provides a secondary battery. The secondary battery comprises the positive electrode sheet according to the first aspect.

In a third aspect, the present application provides a battery pack. The battery pack comprises a case and at least one secondary battery according to the second aspect. The secondary battery is accommodated in the case.

In a fourth aspect, the present application provides an electricity-consumption equipment. The electricity-consumption equipment comprises the secondary battery according to the second aspect or the battery pack according to the third aspect.

### BRIEF DESCRIPTION OF THE DRAWINGS

In order to more clearly illustrate the technical solutions in the embodiments of the present application, the accompanying drawings to be used in the embodiments will be briefly introduced below. Obviously, the drawings in the following description are only some embodiments of the present application. For those of ordinary skill in the art, other drawings can be obtained based on these drawings without paying creative efforts.
FIG. 1 is a schematic diagram of a structure of a household energy storage system according to an implementation of the present disclosure;
FIG. 2 is a schematic diagram of a structure of an energy storage system according to an implementation of the present disclosure;
FIG. 3 is a schematic diagram showing a cycle performance of embodiments 1-1 to 1-3 and comparative examples 1 to 2 of the present disclosure;
FIG. 4 is a SEM (scanning electron microscope) image of a positive electrode sheet of embodiments 1-3 of the present disclosure.

Illustration of reference signs: 1-Energy storage device, 2-Electric energy conversion device, 3-First user load, 4-Second user load, 400-Energy storage system, 410-High voltage cable, 420-First electric energy conversion device, 430-Second electric energy conversion device.

### DETAILED DESCRIPTION

The following description of the technical solutions in the embodiments of the present application will be made clearly and completely with reference to the drawings in the embodiments of the present application, and it is apparent that the described embodiments are only some embodiments of the present application, rather than all embodiments. All other embodiments obtained by the person skilled in the art without creative labor based on the embodiments of the present application are within the scope of protection of the present application.

In the present application, the terms "upper", "lower", "left", "right", "front", "rear", "top", "bottom", "inner", "outer", "vertical", "horizontal", "lateral", "longitudinal" and the like indicate an orientation or a positional relationship based on the orientation or positional relationship shown in the accompanying drawings. These terms are used mainly to better describe the present application and its embodiments, and are not used to limit the indicated device, element or component to have a particular orientation or to be constructed and operated in a particular orientation.

Also, some of the terms described above may be used to indicate other meanings in addition to the orientation or positional relationship. For example, the term "upper" may also be used to indicate some sort of attachment or connection in some cases. The specific meaning of these terms in the present application may be understood by the person skilled in the art as appropriate.

Furthermore, the terms "mount," "set," "provided with," "connect," and "connected with" are understood in a broad sense. For example, they may be a fixed connection, a detachable connection, or an integral construction. They may be a mechanical connection, or an electrical connection. They may be a direct connection, or an indirect connection through an intervening medium, or may be an internal communication between two devices, elements, or components. The specific meaning of the terms in the present application may be understood by the person skilled in the art as appropriate.

Furthermore, the terms "first," "second," and the like, are mainly used to distinguish between different devices, elements, or components (the particular types and constructions may be the same or different), and are not used to indicate or imply the relative importance and quantity of the indicated devices, elements, or components. Unless otherwise indicated, the meaning of "a plurality of" is two or more.

With the increasing demand for the performance of secondary batteries, such as the increasing demand for the performance of secondary batteries in the energy storage scenes of wind power generation and solar power generation, it is not only required that the secondary batteries have high energy density, but also required that the secondary batteries have good cycle performance, so as to ensure that the secondary batteries in the energy storage device can run for a long time. Therefore, how to improve the cycle performance of the secondary batteries become an urgent problem to be solved.

It should be noted that in the content of the present application, a lithium-ion battery is used as an example of a secondary battery to explain the present application, but the secondary battery of the present application is not limited to the lithium-ion battery.

In the related art, the cycle performance of the lithium-ion battery can be improved through a pre-lithiation technology. However, the pre-lithiation technology needs to perform pre-lithiation treatment on the positive electrode sheet or the negative electrode sheet, and the production cost of the lithium-ion battery is greatly improved, which is not beneficial to the energy storage application scenes with relatively high cost requirements. Moreover, the pre-lithiation technology has the problem of insufficient compatibility with the formation process of the production line and safety risks such as overcharging, thermal abuse and the like.

In view of this, the present application provides a positive electrode sheet. The positive electrode sheet comprises a positive current collector. At least one surface of the positive current collector has a positive active material layer. In any 25µm×25µm region of a cross section of the positive active material layer, a percentage of an area of a first positive active material having a cracked structure to a total area of the region is a%, 5≤*α*≤20. For example, *α* is 5, 7, 10, 13, 15, 18, 20 or any range therebetween.

It was found through research by the inventor that when the value *α* is too small (for example, less than 5), it indicates that the content of the first positive active material with a cracked structure in the positive active material layer is too low, and there are relatively few lithium ions extracted from the first positive active material to replenish the Solid Electrolyte Interphase (SEI) membrane, which is not conducive to improving the cycle performance of the lithium-ion battery. When the value *α* is too large (for example, greater than 20), it indicates that the content of the first positive active material with the cracked structure in the positive active material layer is too high, which is not beneficial to the exertion of the capacity of the lithium-ion battery in the initial stage of the cycle. In addition, more positive active material particles in the cycle process of the lithium-ion battery are broken, so that the cycle performance of the lithium-ion battery in the later stage of the cycle (for example, after 4000 cycles) deteriorates too fast, and the cycle performance in the later stage of the lithium-ion battery is affected. By adjusting the value *α* within the above range, the present application can not only use the lithium ions extracted from an inside of the first positive active material to replenish the lithium ions consumed by the SEI membrane, but also be beneficial to the exertion of the capacity of the lithium-ion battery in the initial stage of the cycle, and can also inhibit excessive positive active material particles from breaking. In this way, while improving the cycle performance of the lithium-ion battery, it can also improve the exertion of the capacity of the lithium-ion battery, which is conducive to obtaining a lithium-ion battery with a good cycle performance and a high capacity. When the lithium-ion battery of the present application is used in an energy storage device, it can increase the service life of the energy storage device and reduce the operating cost of the energy storage device.

In some implementations of the present application, the positive active material layer further comprises a second positive active material. Dv10 of the first positive active material is greater than Dv10 of the second positive active material. Dv50 of the first positive active material is greater than Dv50 of the second positive active material. Dv90 of the first positive active material is greater than Dv90 of the second positive active material. In the present application, it is beneficial to regulate the proportion of the first positive active material with a cracked structure in the positive active material layer by regulating Dv10, Dv50 and Dv90 of the first positive active material and the second positive active material to satisfy the above-mentioned size relationship, thereby facilitating the acquisition of a lithium-ion battery with a good cycle performance.

In the present application, Dv10 means the particle size of the particle at which the volume accumulation reaches 10% from the small particle size side in the volume-based particle size distribution. Dv50 means the particle size of the particle at which the volume accumulation reaches 50% from the small particle size side in the volume-based particle size distribution. Dv90 means the particle size of the particle at which the volume accumulation reaches 90% from the small particle size side in the volume-based particle size distribution.

In some implementations of the present application, Dv10 of the first positive active material is *b* µm. Dv50 of the first positive active material is c µm. Dv90 of the first positive active material is *d* µm. Dv10 of the second positive active material is e µm. Dv50 of the second positive active material is f µm. Dv90 of the second positive active material is *g* µm. It is satisfied: b > 0.4, 1≤*c*≤1.6, 3≤*d*≤20, and *e*≤0.4, 0.5≤*f*≤0.7, *g*≤1.0. For example, b is 0.41, 0.5, 0.6, 0.8, 1.0 or any range therebetween. c is 1, 1.2, 1.3, 1.4, 1.5, 1.6 or any range therebetween. d is 3, 5, 7, 9, 10, 12, 15, 17, 20 or any range therebetween. e is 0.1, 0.2, 0.3, 0.4 or any range therebetween. f is 0.5, 0.6, 0.7 or any range therebetween. *g* is 0.8, 0.9, 1.0 or any range therebetween.

After further research, it was found by the inventor that when the particle size of the positive active material is relatively small, the positive active material particles will basically not crack, and the structural stability of the positive active material is high. However, the capacity of the lithium-ion battery is basically fully exerted in the initial stage. In addition, the lithium ions are consumed by the SEI membrane during the cycle, and the lithium ions in the positive active material are basically all used in the initial stage. Therefore, there is no more lithium-ion replenishment during the cycle, resulting in rapid decay of the cycle performance. When the particle size of the positive active material is relatively large, as the cycle continues, the positive active material particles may gradually crack, and the lithium ions inside them can also extract to replenish the lithium ions consumed by the SEI membrane. In this way, the capacity retention rate can increase to even greater than 100%, but it will cause the exertion of capacity of the lithium-ion battery to be low in the initial stage, and the positive active material particles are more easily broken during the cycle, resulting in the cycle performance of the lithium-ion battery in the later stage of the cycle decaying too fast, and affecting the later cycle performance of the lithium-ion battery. The positive active material layer of the present application comprises a first positive active material and a second positive active material. By regulating the Dv10, Dv50 and Dv90 of the first positive active material and the second positive active material within the above-mentioned range, the cycle performance of the lithium-ion battery can be improved by using the first positive active material, and the initial efficiency (referred to as first efficiency) of the lithium-ion battery can be balanced by using the second positive active material, which is conducive to obtaining a lithium-ion battery with a good cycle performance and a high capacity.

In some implementations of the present application, the first positive active material comprises a doping element and a carbon element. The concentration of the doping element in the first positive active material ranges from 1ppm to 800ppm, for example, 1ppm, 10ppm, 100ppm, 500ppm, 800ppm or any range therebetween. The content of the carbon element in the first positive active material is h% by mass, 0.5≤*h* < 1.1. For example, h=0.5, 0.7, 0.9, 1.0, 1.08 or any range therebetween. In some implementations of the present application, the content of the doping element in the first positive active material is 0ppm. That is, the first positive active material does not contain the doping element. In the present application, by regulating the concentration of the doping element and the content of the carbon element in the first positive active material within the above range, it is conducive to agglomeration of the particles of the first positive active material. Moreover, the growing agglomerated particles may have grain boundaries, and cracked structures are generated along the grain boundaries during the cycle of the lithium-ion battery, thereby facilitating the generation of cracked structures during the cycle of the lithium-ion battery.

In some implementations of the present application, the second positive active material comprises a doping element and a carbon element. The concentration of the doping element in the second positive active material ranges from 1500ppm to 6000ppm, for example, 1500ppm, 1800ppm, 2000ppm, 2500ppm, 3000ppm, 5000ppm, 6000ppm or any range therebetween. The content of the carbon element in the second positive active material is i% by mass, 1.1≤*i*≤3. For example, i=1.1, 1.5, 2, 2.5, 3 or any range therebetween. In the present application, by regulating the concentration of the doping element and the content of the carbon element in the second positive active material within the above range, the contact between the particles of the positive active material can be inhibited during the sintering preparation process of the positive active material, thereby inhibiting the melting growth of the particles, so that the particles of the second positive active material are less likely to break during the cycle of the lithium-ion battery.

In some implementations of the present application, the doping element comprises at least one of Ti, Mg, Nb, V, W, Zr, Ta and Y. By selecting the above-mentioned doping elements, it is advantageous to obtain a lithium-ion battery with a good cycle performance and a high capacity.

In some implementations of the present application, based on the mass of the positive active material layer, the content of the first positive active material is m₁% by mass, and the content of the second positive active material is m₂% by mass, satisfying: m₁/(m₁+m₂)≤20%. For example, m₁/(m₁+m₂)=5%, m₁/(m₁+m₂)=7%, m₁/(m₁+m₂)=8%, m₁/(m₁+m₂)=10%, m₁/(m₁+m₂)=12%, m₁/(m₁+m₂)=15%, m₁/(m₁+m₂)=18%, m₁/(m₁+m₂)=20% or any range therebetween. By regulating m₁/(m₁+m₂) within the above range, the lithium ions extracted from the first positive active material can be used to replenish the lithium ions consumed by the SEI membrane, it is beneficial to the exertion of capacity of the lithium-ion battery in the initial stage of the cycle, and can also inhibit the excessive breakage of the positive active material particles. While improving the cycle performance of the lithium-ion battery, it can also improve the exertion of the capacity of the lithium-ion battery.

In some implementations of the present application, the cracked structure has cracks with an average width from 10nm to 200nm and an average length from 40nm to 5000nm. For example, the average width is 10nm, 50nm, 100nm, 150nm, 200nm or any range therebetween, and the average length is 40nm, 100nm, 500nm, 1000nm, 3000nm, 5000nm or any range therebetween. The cracked structure of the present application may refer to a crack that appears in a single positive active material particle (such as a lithium iron phosphate particle). In the present application, by regulating the average width and average length of the cracked structure within the above range, it is beneficial for the lithium ions that have not extracted from the inside of the first positive active material particles during the first two cycles to extract from the cracked structure, thereby replenishing the lithium ions consumed by formation of the SEI membrane and improving the cycle performance of the lithium-ion battery.

In some implementations of the present application, a button cell containing the first positive active material is subjected to a 0.1C discharge test, and the initial efficiency of the button cell ranges from 96% to 98.5%. For example, the initial efficiency is 96%, 96.5%, 97%, 97.5%, 98%, 98.5% or any range therebetween. The initial efficiency of the button cell of the present application is within the above range, indicating that the first positive active material has a certain polarization, and also indicating that there are still enough lithium ions remaining inside the first positive active material. In this way, the first positive active material particles are more likely to have cracked structures during the cycle process and the internally stored lithium ions are gradually extracted from the cracked structures, thereby improving the cycle performance of the lithium-ion battery.

The present application does not particularly limit the types of the first positive active material and the second positive active material, as long as the purpose of the present application can be achieved. In some implementations of the present application, the first positive active material and the second positive active material are selected from at least one of lithium iron phosphate and lithium manganese iron phosphate.

In the present application, the positive active material layer may be arranged on one surface of the positive current collector in a thickness direction, or on two surfaces of the positive current collector in the thickness direction. In the present application, the positive active material layer is arranged on the surface of the positive current collector. That is, the positive active material layer may be arranged in a partial area of one surface of the positive current collector, or may be arranged in the entire area of one surface of the positive current collector. In the present application, there is no special restriction on the positive current collector, as long as the purpose of the present application can be achieved. For example, it can comprise, but is not limited to, an aluminum foil, an aluminum alloy foil or a composite current collector, etc. In the present application, there is no special restriction on the thickness of the positive current collector, as long as the purpose of the present application can be achieved. For example, the thickness is 8µm to 15µm.

The present application does not particularly limit the method of regulating the percentage of the area of the first positive active material with a cracked structure to the total area of the region, as long as the purpose of the present application can be achieved. In an implementation, by regulating the Dv10, Dv50 and Dv90 of the first positive active material and the second positive active material in the positive active material layer, it is possible to make the positive active material particles more prone to cracked structures or less prone to cracked structures. In an implementation, by regulating the content of the first positive active material and the second positive active material in the positive active material layer, the area ratio of the first positive active material with cracked structure can also be adjusted. In an implementation, by regulating the content of the doping element and the carbon content in the positive active material, it is possible to make the positive active material particles more prone to cracked structures or less prone to cracked structures.

The present application does not particularly limit the method of regulating the particle size distribution of the first positive active material and the second positive active material, as long as the purpose of the present application can be achieved. For example, the particle size, doping content and coating content of the precursor (such as iron phosphate) can be controlled, and the particle size distribution of the material can be initially regulated by grinding with a grinder, and then spray drying, sintering and airflow crushing can be performed to obtain a positive active material that meets the particle size distribution range of the present application. Generally speaking, during the airflow crushing, the particle size decreases as the gas flow rate increases, and the particle size distribution of the material can be regulated by controlling the gas flow rate of the airflow crushing process. The material with the desired particle size distribution can be further selected in combination with the classifier of the airflow crushing equipment.

The present application also provides a secondary battery, comprising the positive electrode sheet described in any implementation of the present application.

In some implementations of the present application, the maximum discharge capacity of the secondary battery during the cycle is A₁ mAh, and the second cycle discharge capacity of the secondary battery during the cycle is A₂ mAh. It is satisfied: 101.5%≤A₁/A₂ ≤106%. For example, A₁A₂=101.5%, A₁A₂=102%, A₁/A₂=104%, A₁/A₂=105%, A₁/A₂=106% or any range therebetween. A₁ and A₂ of the secondary battery of the present application satisfy the above relationship, indicating that the cycle capacity increase rate of the lithium-ion battery is between 1.5% and 6%, and also indicating that there are residual lithium ions inside the first positive active material, which gradually extract during the cycle to replenish the lithium ions consumed by the SEI membrane. The greater the cycle capacity increase rate, the higher the capacity retention rate compared to the initial 100% retention rate, and the longer the time it takes for the lithium-ion battery to decay from the highest capacity point to the 100% retention rate. Therefore, the cycle performance of the lithium-ion battery is better.

The secondary battery of the present application also comprises a negative electrode sheet. The present application does not particularly limit the negative electrode sheet, as long as the purpose of the present application can be achieved. For example, the negative electrode sheet generally comprises a negative electrode collector and a negative active material layer. The negative active material layer may be arranged on one surface or two surfaces along the thickness direction of the negative electrode collector. In the present application, the negative active material layer is arranged on the surface of the negative electrode collector. That is, the negative active material layer may be arranged in a partial area of one surface of the negative electrode collector, or in the entire area of one surface of the negative electrode collector. The present application does not particularly limit the negative current collector, as long as the purpose of the present application can be achieved. For example, it may comprise, but is not limited to, a copper foil, a copper alloy foil, a nickel foil or a composite current collector, etc. In the present application, there is no special restriction on the thickness of the negative current collector, as long as the purpose of the present application can be achieved. For example, the thickness is 4µm to 12µm. The thickness of the negative active material layer of the present application may be 70µm to 200µm.

In the present application, the negative active material layer comprises a negative active material. The negative active material is not particularly limited, as long as the purpose of the present application can be achieved. For example, it may comprise at least one of artificial graphite, natural graphite, mesophase carbon microspheres, soft carbon, hard carbon, silicon, and silicon carbon.

In the present application, the negative active material layer may also comprise a negative binder. The present application does not particularly limit the negative binder, as long as the purpose of the present application can be achieved. For example, it may comprise, but is not limited to, at least one of acrylate, polyamide, polyimide, polyamide-imide, polyvinylidene fluoride, styrene-butadiene rubber, sodium alginate, polyvinyl alcohol, polytetrafluoroethylene, polyacrylonitrile, sodium carboxymethyl cellulose, and potassium carboxymethyl cellulose.

The secondary battery of the present application also comprises a separator. The present application does not particularly limit the separator, and those skilled in the art can choose it according to actual needs, as long as the purpose of the present application can be achieved. For example, the material of the separator may comprise, but is not limited to, at least one of polyolefin (PO), especially polyethylene (PE) and polypropylene (PP), polyester (such as polyethylene terephthalate (PET)), cellulose, polyimide (PI), polyamide (PA), spandex or aramid. The type of the separator may comprise, but is not limited to, at least one of woven membrane, non-woven membrane (non-woven fabric), microporous membrane, composite membrane, separator paper, rolled membrane or spinning membrane.

The secondary battery of the present application also comprises an electrolyte. The present application does not particularly limit the electrolyte, and those skilled in the art can choose it according to actual needs, as long as the purpose of the present application can be achieved. For example, at least one of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC) and fluoroethylene carbonate (FEC) is mixed in a certain mass ratio or volume ratio to obtain a non-aqueous organic solvent, and then a lithium salt is added to be dissolved and mixed evenly. The present application has no restrictions on the type of lithium salt, as long as the purpose of the present application can be achieved. For example, the lithium salt may comprise at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium bis(oxalate)borate (LiBOB) or lithium difluoroborate. The present application does not particularly limit the concentration of the lithium salt in the electrolyte, as long as the purpose of the present application can be achieved. For example, the concentration of the lithium salt is 1.0 mol/L to 2.0 mol/L.

The secondary battery of the present application also comprises a housing, and the present application does not particularly limit the housing. Those skilled in the art can choose it according to actual needs, as long as the purpose of the present application can be achieved. For example, the housing may comprise at least one of an aluminum-plastic film, an aluminum housing, and a steel housing.

The present application does not particularly limit the preparation method of the secondary battery, and the preparation method known in the art can be selected as long as the purpose of the present application can be achieved. For example, the preparation method of the secondary battery comprises, but is not limited to, the following steps: stacking the positive electrode sheet, the separator and the negative electrode sheet in order, performing winding, folding and other operations as needed to obtain a bare battery cell with a winding structure, placing the bare battery cell in a packaging bag, injecting the electrolyte into the packaging bag, the aluminum housing or the steel housing and sealing it to obtain a secondary battery.

The present application also provides a battery pack, comprising a case and at least one secondary battery in any of the above implementations, and the secondary battery is accommodated in the case. The battery pack with the secondary battery has good performance and is conducive to the use of the battery pack. By accommodating the battery in the case, the fixation and protection of the battery can be increased, and the service life of the battery pack can be improved. It can be understood that the battery pack may have one or more secondary batteries. When the battery pack contains multiple secondary batteries, the multiple secondary batteries may be connected in at least one of parallel and series.

The present application also provides an electricity-consumption equipment, comprising the secondary battery or the battery pack in any of the above embodiments, which is conducive to improving the product competitiveness and usage performance of the electricity-consumption equipment. In an optional implementation, the electricity-consumption equipment comprises an electricity-consumption equipment body, and the secondary battery or battery pack is configured to supply power to the electricity-consumption equipment body. In an optional implementation, the electricity-consumption equipment body comprises an equipment positive electrode and an equipment negative electrode. The positive electrode sheet of the secondary battery or battery pack is configured to electrically connect to the equipment positive electrode of the electricity-consumption equipment body, and the negative electrode sheet of the secondary battery or battery pack is configured to electrically connect to the equipment negative electrode of the electricity-consumption equipment body, so as to supply power to the electricity-consumption equipment.

The electricity-consumption equipment of the present application may comprise, but is not limited to, a container, a household energy storage system, an electric scooter, an electric vehicle, a ship, a spacecraft, an electric toy and an electric tool, etc. The spacecraft is, for example, an airplane, a rocket, a space shuttle and a spaceship, etc. The electric toy comprises, for example, a fixed or mobile electric toy. For example, it may be an electric vehicle toy, an electric ship toy and an electric airplane toy, etc. The electric tool comprises, for example, a metal cutting electric tool, a grinding electric tool, an assembly electric tool and a railway electric tool. For example, it may be an electric drill, an electric grinder, an electric wrench, an electric screwdriver, an electric hammer, an impact drill, a concrete vibrator and an electric planer.

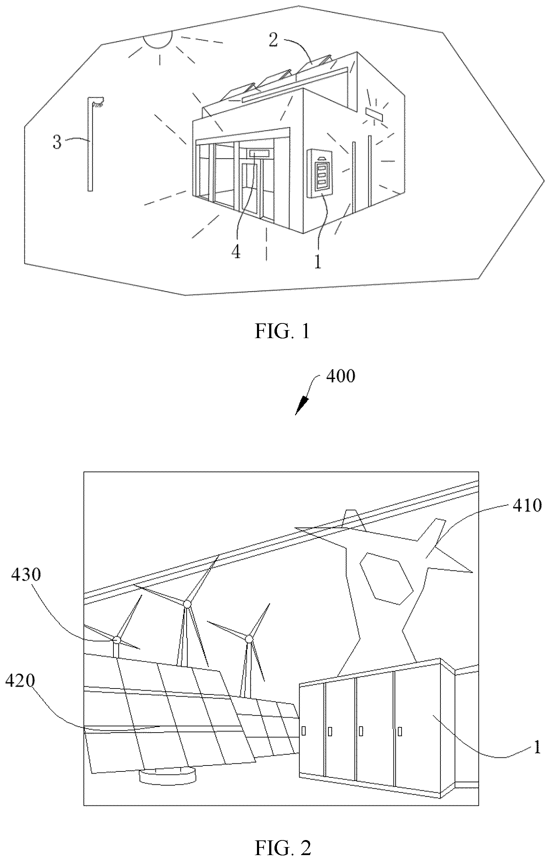

Referring to FIG. 1, which is a schematic diagram of a structure of a household energy storage system of an implementation of the present application, the implementation of FIG. 1 of the present application is described by taking the household energy storage scenario in the user-side energy storage as an example. The energy storage device of the present application is not limited to the household energy storage scenario.

The present application provides a household energy storage system. The household energy storage system comprises an electric energy conversion device 2 (a photovoltaic panel), a first user load 3 (a street lamp), a second user load 4 (a household appliance such as an air conditioner), etc., and an energy storage device 1. The energy storage device 1 is a small energy storage box that can be mounted on an outdoor wall by wall hanging. For example, the photovoltaic panel can convert solar energy into electric energy during the low electricity price period, and the energy storage device 1 is configured to store the electric energy and supply the electric energy to the street lamps and household appliances for use during the peak electricity price, or to supply power when the power grid is off/out of power.

Referring to FIG. 2, which is a schematic diagram of a structure of an energy storage system 400 of an implementation of the present application, the implementation of FIG. 2 of the present application is described by taking the shared energy storage scenario on the power generation/distribution side as an example. The energy storage device 1 of the present application is not limited to the energy storage scenario on the power generation/distribution side.

The present application provides an energy storage system 400. The energy storage system 400 comprises: a high-voltage cable 410, a first electric energy conversion device 420, a second electric energy conversion device 430, and the energy storage device 1 provided in the present application. In the case of power generation, the first electric energy conversion device 420 and the second electric energy conversion device 430 are configured to convert energy of other forms into electric energy, connected to the high-voltage cable 410 and supply the electric energy to the power consumption side of the distribution network for use. When the electrical load is low and the first electric energy conversion device 420 and the second electric energy conversion device 430 generate excess power, the excess power is stored in the energy storage device 1 to reduce the wind and solar power abandonment rates and improve the problem of new energy power generation and consumption. When the electrical load is high, the power grid issues an instruction to transmit the electricity stored in the energy storage device 1 to the power consumption side In a grid-connected mode in conjunction with the high-voltage cable 410, providing peak load regulation, frequency regulation, standby and other services for the operation of the power grid, giving full play to the peak load regulation of the power grid, promoting peak load reduction and valley filling of the power grid, and alleviating the power supply pressure of the power grid.

Optionally, the first electric energy conversion device 420 and the second electric energy conversion device 430 can convert at least one of solar energy, light energy, wind energy, thermal energy, tidal energy, biomass energy and mechanical energy into electric energy.

The number of energy storage devices 1 may be multiple, multiple energy storage devices 1 are connected in series or in parallel, and multiple energy storage devices 1 are supported and electrically connected by an isolation plate (not shown). In this embodiment, "multiple" refers to two or more. An energy storage box may also be provided outside the energy storage device 1 to accommodate the energy storage device 1.

Optionally, the energy storage device 1 may comprise, but is not limited to, a single cell, a battery module, a battery pack, a battery system, etc. The actual application form of the energy storage device 1 provided in the embodiment of the present application may be, but is not limited to, the listed products, and may also be other application forms. The embodiment of the present application does not strictly limit the application form of the energy storage device 1. The embodiment of the present application only takes the energy storage device 1 as a multi-core battery as an example for explanation. When the energy storage device 1 is a single cell, the energy storage device 1 may be at least one of a cylindrical battery, a square battery, etc.

### Embodiments

Hereinafter, embodiments and comparative examples are given to more specifically illustrate the implementations of the present application. Various tests and evaluations are carried out according to the following methods.

### Test methods and equipment:

Test of the area ratio of the first positive active material with a cracked structure:
A lithium-ion battery after 800 cycles is taken and disassembled after full discharge, and the positive electrode sheet is taken out. The positive electrode sheet is cut into a sample of 1.1cm×0.8cm, which can be cut along the thickness direction of the positive electrode sheet, or cut along the length direction of the positive electrode sheet, or cut obliquely. Then, the sample is placed under SEM for observation at a magnification of 10K. Any five 25µm×25µm regions are selected in the field of view. The area of each 25µm×25µm region is recorded as S₁. The area occupied by the first positive active material with a crack is calculated, which is recorded as S₂. The area ratio is expressed as α%=(S_{2/}S₁)×100%. Then, an average value is taken, which is the area ratio of the first positive active material with a cracked structure.

Tests of Dv10, Dv50, and Dv90 of the first positive active material and the second positive active material:
Dv10, Dv50, and Dv90 of the first positive active material and the second positive active material are tested respectively using a laser particle size analyzer.

Tests of the average width and average length of the cracked structure:
The SEM image is opened using *Image J* software, the straight line tool is selected, and the width and length of the crack are measured.

Initial efficiency test of the positive active material:
Under a condition of 25°C, the first positive active material and the second positive active material prepared in each embodiment and comparative example are respectively made into circular positive electrode sheets, then they are made into button batteries, and then charge and discharge test is performed on the button batteries. The test process is: standing for 6 hours; then charging to 3.75V at a constant current of 0.1C, and then charging to 50µA at a constant voltage, which is the charging stage; standing for 10 minutes, and then discharging to 2.0V at a constant current of 0.1C, and standing for 10 minutes, which is the discharge stage. The calculation method of the initial efficiency is: battery discharge capacity during the discharge stage/battery charging capacity during the charging stage.

The preparation process of the button battery is as follows.

The positive electrode sheet is blanked into a circular positive electrode sheet with a diameter of 12 mm, and a circular lithium sheet with a diameter of 16 mm is used as the negative electrode sheet. The circular positive electrode sheet, the separator, and the circular lithium sheet are stacked in order, and the separator is placed between the positive electrode sheet and the negative electrode sheet to play an isolating role. Then, the prepared electrolyte is injected to assemble the button battery. The electrolyte is the same as the electrolyte used in each embodiment and comparative example.

Initial efficiency test of lithium-ion battery (full battery):
At a condition of 25°C, the lithium-ion battery that was left standing for 24 hours after injection is formed with a current of 0.1C and a charging time of 2 hours, the capacity being C₁. The formed lithium-ion battery is charged to 3.65V at a constant current of 0.33C, and then charged to 0.05C at a constant voltage. The charging capacity of the lithium-ion battery is calculated to be C₂, in units of mAh or Ah. After standing for 10 minutes, it is discharged to 2.5V at a constant current of 0.33C. The discharge capacity of the lithium-ion battery is calculated to be C₃, in units of mAh or Ah. Then, the initial efficiency = (C₃/ C₁+C₂) × 100%.

Cycle performance test:
At a condition of 25°C, the lithium-ion batteries prepared in each embodiment and comparative example are charged to 3.65V at a constant power of 0.5P, stand for 10 minutes, then are discharged to 2.5V at a constant power of 0.5P, and then stand for 10 minutes, which is one charge and discharge cycle. The capacity retention rate of the battery after 800 cycles of such charging/discharge is calculated. Capacity retention rate of lithium-ion battery after 800 cycles (%) = discharge capacity of the 800th cycle/discharge capacity of the second cycle × 100%. Cycle capacity increase rate = (maximum discharge capacity of the cycle process/discharge capacity of the second cycle) × 100%.

### Embodiment 1-1

### <Preparation of first positive active material>

After iron phosphate (FePO₄) and lithium carbonate (Li₂CO₃) are mixed in a stoichiometric ratio, carbon source glucose and dopant TiO₂ are added. Then, the mixture is added to a dispersion tank with deionized water as the solvent. The Dv50 of the mixture is controlled to about 0.5µm through coarse grinding and fine grinding, and then through processes of spray drying, sintering, and airflow crushing, the first positive active material is obtained. The Dv10 of the first positive active material is 0.42µm, the Dv50 of the first positive active material is 1.2µm, and the Dv90 of the first positive active material is 3.7µm. The concentration of the doping element in the first positive active material is 800ppm, the content of the carbon element in the first positive active material is 0.8% by mass, and the initial efficiency is 97%.

### <Preparation of second positive active material>

After iron phosphate (FePO₄) and lithium carbonate (Li₂CO₃) are mixed in a stoichiometric ratio, carbon source glucose, polyethylene glycol (PEG), and dopant TiO₂ are added. Then, the mixture is added to a dispersion tank with deionized water as the solvent. The Dv50 of the mixture is controlled to about 0.2µm through coarse grinding and fine grinding, and then through processes of spray drying, sintering, and airflow crushing, the second positive active material is obtained. The Dv10 of the second positive active material is 0.35µm, the Dv50 of the second positive active material is 0.65µm, and the Dv90 of the second positive active material is 0.95µm. The concentration of the doping element in the first positive active material is 1800ppm, the content of the carbon element in the first positive active material is 1.8% by mass, and the initial efficiency is 99.5%.

### <Preparation of positive electrode sheet>

The first positive active material and the second positive active material are mixed at a mass ratio of 5:95 to obtain a positive mixed material, and then the positive mixed material, a conductive agent conductive carbon black (Super-P), and a binder PVDF are mixed at a mass ratio of 97: 2.5:0.5. Then, N-methylpyrrolidone (NMP) is added as a solvent to prepare a positive electrode slurry with a solid content of 50wt%, and stirred evenly. Then, the positive electrode slurry is evenly coated on one surface of a positive electrode current collector with a thickness of 10µm, dried at 85°C, and rolled to obtain a positive electrode sheet. Then, the above steps are repeated on the other surface of the positive electrode sheet to obtain a positive electrode sheet coated with a positive active material layer on both sides. The double-sided surface density of the positive active material layer is 0.4mg/cm², and the compaction density is 2.4g/cm³. The positive current collector is an aluminum foil with a conductive coating, the thickness of the conductive coating is 2µm, and the conductive material is Super P.

### <Preparation of negative electrode sheet>

The negative active material artificial graphite, thickener sodium carboxymethyl cellulose (CMC), conductive carbon black Super-P and binder styrene-butadiene rubber (SBR) are mixed in a mass ratio of 96:2:1:1. The deionized water is added to prepare a negative electrode slurry with a solid content of 60wt%, and stirred evenly. The negative electrode slurry is evenly coated on one surface of a negative current collector copper foil with a thickness of 6µm, dried at 85°C, and rolled to obtain a negative electrode sheet. Then, the above steps are repeated on the other surface of the negative electrode sheet to obtain a negative electrode sheet coated with a negative active material layer on both sides. The double-sided surface density of the negative active material layer is 0.18mg/cm², and the compaction density is 1.6g/cm³.

### <Preparation of electrolyte>

Ethylene carbonate (EC), ethyl methyl carbonate (EMC), and dimethyl carbonate (DMC) are mixed in a volume ratio of 3:4:3, dissolved and stirred thoroughly, and placed in an environment of 5°C or less for 12 hours. Then, lithium salt LiPF₆ is added and mixed evenly to obtain an electrolyte. The molar concentration of LiPF₆ in the electrolyte is 1mol/L.

### <Preparation of separator>

A polypropylene (PP) porous polymer film with a thickness of 16µm is used as a separator.

### <Preparation of lithium-ion battery>

The positive electrode sheet, separator, and negative electrode sheet prepared above are stacked in order, with the separator placed between the positive and negative electrodes to play a role of isolation, and wound to obtain a bare battery cell. The bare battery cell is placed in an aluminum-plastic film packaging bag, and the electrolyte is injected after drying. After the processes such as vacuum packaging, standing, and formation, it is activated in the formation stage. During activation, negative pressure is drawn to remove gas. Then, after the processes such as capacity detection and Open Circuit Voltage (OCV) detection, the finished lithium-ion battery is made.

After 800 cycles of the lithium-ion battery, the average width of the cracked structure is 14nm, the average length is 300nm, and the value *α* is shown in Table 1-1.

### Embodiment 1-2 to embodiment 1-3

Except that in <Preparation of positive electrode sheet>, the mass ratio of the first positive active material and the second positive active material is adjusted according to Table 1-1 to regulate the value a, the rest is the same as embodiment 1-1.

### Embodiment 2-1 to embodiment 2-4

Except that in <Preparation of first positive active material> and <Preparation of second positive active material>, the Dv10, Dv50 and Dv90 of the first positive active material and the second positive active material are regulated according to Table 2-1, the rest is the same as embodiment 1-2.

### Embodiment 3-1 to embodiment 3-9

Except that in <Preparation of first positive active material> and <Preparation of second positive active material>, the doping element type, doping element content and carbon element content of the first positive active material and the second positive active material are regulated according to Table 3-1, the rest is the same as embodiment 1-2. The dopant of embodiment 3-7 is V₂O₅, the dopant of embodiment 3-8 is MgO, and the dopant of embodiment 3-9 is Nb₂O₅.

### Comparative example 1

Except that in <Preparation of positive electrode sheet>, the positive active material is all selected to use the second positive active material, the rest is the same as embodiment 1-1.

### Comparative example 2

Except that in <Preparation of positive electrode sheet>, the positive active material is all selected to use the first positive active material, the rest is the same as embodiment 1-1.

### Comparative example 3 to comparative example 4

Except that in <Preparation of first positive active material > and <Preparation of second positive active material>, the Dv10, Dv50 and Dv90 of the first positive active material and the second positive active material are regulated according to Table 2-1, the rest is the same as embodiment 1-2.

**TABLE 1-1**

| Serial number | Content m₁ of first positive active material (wt%) | Content m₂ of second positive active material (wt%) | m₁/(m₁+m₂) | Value *a* (%) |
|---|---|---|---|---|
| Embodiment 1-1 | 5 | 95 | 5% | 5 |
| Embodiment 1-2 | 10 | 90 | 10% | 8 |
| Embodiment 1-3 | 20 | 80 | 20% | 18 |
| Comparative example 1 | / | 100 | / | 3 |
| Comparative example 2 | 100 | / | / | 35 |

| | | | | |
|---|---|---|---|---|
| Note: in Table 1-1, "/" indicates that there is no relevant preparation parameter. | | | | |

**TABLE 1-2**

| Serial number | First charge gram capacity of full battery (mAh/g) | First discharge gram capacity of full battery (mAh/g) | Initial efficiency of full battery | Capacity retention rate after 800 cycles (%) | A₁/A₂ |
|---|---|---|---|---|---|
| Embodiment 1-1 | 160.2 | 145 | 90.5% | 96.3% | 101.8% |
| Embodiment 1-2 | 159.4 | 143 | 89.7% | 98.5% | 102.7% |
| Embodiment 1-3 | 158.2 | 140 | 88.5% | 99.8% | 103.5% |
| Comparative example 1 | 161.1 | 147 | 91.2% | 94% | 100.3% |
| Comparative example 2 | 154.6 | 134 | 86.7% | 100% | 104.5% |

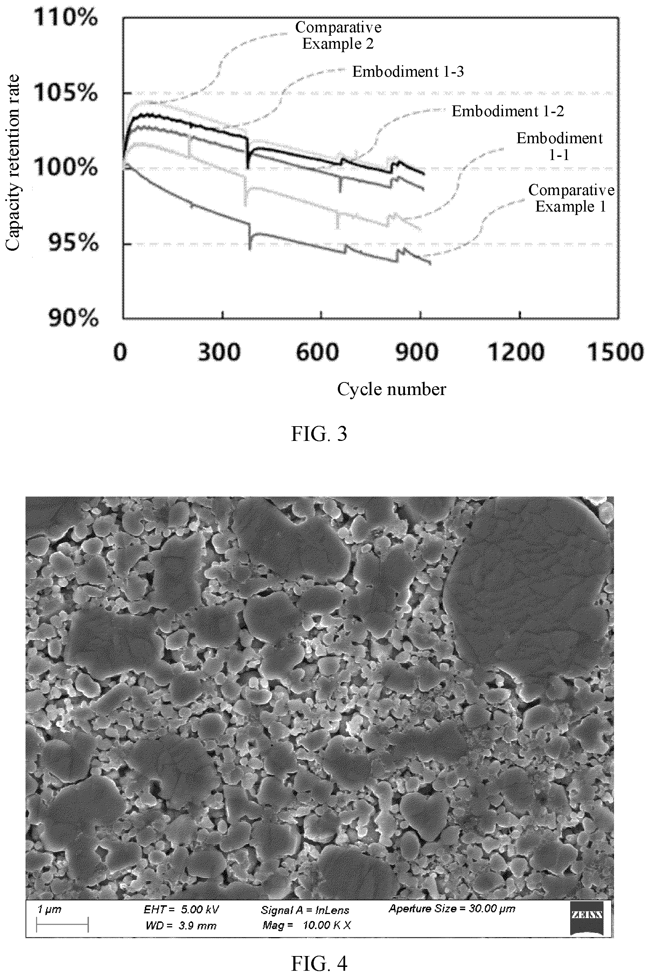

In combination with Table 1-2 and FIG. 3, it can be seen from embodiment 1-1 to embodiment 1-3 and comparative examples 1 to 2 that when the value *α* is too small (for example, comparative example 1), the initial efficiency of the lithium-ion battery is high, but the capacity retention rate after 800 cycles is low; when the value *α* is too large (for example, comparative example 2), the capacity retention rate of the lithium-ion battery after 800 cycles is high, but the initial efficiency is low, which is not conducive to the exertion of the capacity of the lithium-ion battery. In the present application, the capacity retention rate of the lithium-ion battery after 800 cycles is significantly improved, and the initial efficiency of the lithium-ion battery is balanced. It can be seen that by regulating the value *α* within the range of the present application, while improving the cycle performance of the lithium-ion battery, it is also possible to improve the exertion of the capacity of the lithium-ion battery, which is conducive to obtaining a lithium-ion battery with a good cycle performance and a high capacity. In addition, A₁/A₂ of the lithium-ion batteries of each embodiment of the present application is within the range of the present application, indicating that the lithium-ion battery has a good cycle performance.

**TABLE 2-1**

| Serial number | First positive active material | | | Second positive active material | | | Value *a* (%) |
|---|---|---|---|---|---|---|---|
| | Dv10(µm) | Dv50(µm) | Dv90(µm) | Dv10(µm) | Dv50(µm) | Dv90(µm) | |
| Embodiment 1-2 | 0.42 | 1.2 | 3.7 | 0.35 | 0.65 | 0.95 | 8 |
| Embodiment 2-1 | 0.45 | 1.0 | 3 | 0.35 | 0.65 | 0.95 | 7 |
| Embodiment 2-2 | 1.0 | 1.6 | 20 | 0.35 | 0.65 | 0.95 | 10 |
| Embodiment 2-3 | 0.42 | 1.2 | 3.7 | 0.25 | 0.5 | 0.90 | 9 |
| Embodiment 2-4 | 0.42 | 1.2 | 3.7 | 0.4 | 0.7 | 1.0 | 9 |
| Comparative example 3 | 0.30 | 0.60 | 1.0 | 0.35 | 0.65 | 1.0 | 2 |
| Comparative example 4 | 0.42 | 1.2 | 3.7 | 0.45 | 1.3 | 3.9 | 23 |

**TABLE 2-2**

| Serial number | Initial efficiency of first positive active material | First charge gram capacity of full battery (mAh/g) | First discharge gram capacity of full battery (mAh/g) | Initial efficiency of full battery | Capacity retention rate after 800 cycles (%) | A₁/A₂ |
|---|---|---|---|---|---|---|
| Embodiment 1-2 | 97% | 159.4 | 143 | 89.7% | 98.5% | 102.7% |
| Embodiment 2-1 | 97.3% | 159.6 | 143.5 | 89.9% | 98.1% | 102.4% |
| Embodiment 2-2 | 96.5% | 157 | 140 | 89.2% | 99.0% | 103.8% |
| Embodiment 2-3 | 97% | 159.8 | 143.7 | 89.9% | 97.0% | 102.1% |
| Embodiment 2-4 | 97% | 158.3 | 142 | 89.7% | 97.3% | 102.5% |
| Comparative example 3 | 99.6% | 161.5 | 147.4 | 91.3% | 93.8% | 100.2% |
| Comparative example 4 | 96.8% | 155.6 | 134.7 | 86.6% | 100.1% | 104.7% |

Combined with Table 2-2, it can be seen from embodiment 1-2, embodiment 2-1 to embodiment 2-4 and comparative example 3 to comparative example 4 that the capacity retention rate of the lithium-ion battery of the embodiment of the present application after 800 cycles is significantly improved, and the first efficiency of the lithium-ion battery is balanced. It can be seen that by regulating the Dv10, Dv50 and Dv90 of the first positive active material and the second positive active material within the range of the present application, the first positive active material can be used to improve the cycle performance of the lithium-ion battery, and the second positive active material can be used to balance the first efficiency of the lithium-ion battery, which is conducive to obtaining a lithium-ion battery with a good cycle performance and a high capacity. In addition, A₁/A₂ of the lithium-ion battery and the first efficiency of the button battery of the first positive active material of each embodiment of the present application are within the range of the present application, indicating that the lithium-ion battery has a good cycle performance.

**TABLE 3-1**

| Serial number | First positive active material | | | Second positive active material | | | Value a (%) |
|---|---|---|---|---|---|---|---|
| | Types of doping elements | Content of types of doping elements (ppm) | Carbon content (wt%) | Types of doping elements | Content of types of doping elements (ppm) | Carbon content (wt%) | |
| Embodiment 1-2 | Ti | 800 | 0.8 | Ti | 1800 | 1.8 | 8 |
| Embodiment 3-1 | Ti | 10 | 0.8 | Ti | 1800 | 1.8 | 10 |
| Embodiment 3-2 | Ti | 400 | 0.8 | Ti | 1800 | 1.8 | 9 |
| Embodiment 3-3 | Ti | 800 | 0.8 | Ti | 2500 | 1.8 | 8 |
| Embodiment 3-4 | Ti | 800 | 0.8 | Ti | 3000 | 1.8 | 8 |
| Embodiment 3-5 | Ti | 800 | 0.5 | Ti | 1800 | 1.1 | 9 |
| Embodiment 3-6 | Ti | 800 | 1.0 | Ti | 1800 | 3.0 | 8 |
| Embodiment 3-7 | V | 800 | 0.8 | V | 1800 | 1.8 | 8 |
| Embodiment 3-8 | Mg | 800 | 0.8 | V | 1800 | 1.8 | 9 |
| Embodiment 3-9 | Nb | 800 | 0.8 | V | 1800 | 1.8 | 7 |

**TABLE 3-2**

| Serial number | First charge gram capacity of full battery (mAh/g) | First discharge gram capacity of full battery (mAh/g) | Initial efficiency of full battery | Capacity retention rate after 800 cycles (%) | A₁/A₂ |
|---|---|---|---|---|---|
| Embodiment 1-2 | 159.4 | 143 | 89.7% | 98.5% | 102.7% |
| Embodiment 3-1 | 157.2 | 140 | 89.1% | 98.3% | 103.5% |
| Embodiment 3-2 | 158 | 142 | 89.9% | 98.6% | 103.1% |
| Embodiment 3-3 | 159.8 | 143.7 | 89.9% | 97.0% | 102.1% |
| Embodiment 3-4 | 160.3 | 144 | 89.8% | 96.3% | 101.8% |
| Embodiment 3-5 | 157 | 140 | 89.2% | 99.2% | 104.2% |
| Embodiment 3-6 | 159.0 | 143 | 89.9% | 98.1% | 103% |
| Embodiment 3-7 | 159.1 | 143 | 89.9% | 98.3% | 103% |
| Embodiment 3-8 | 158.7 | 142 | 89.5% | 98.5% | 103.3% |
| Embodiment 3-9 | 158.5 | 142 | 89.6% | 98.6% | 103.2% |

The type and content of doping elements and the content of carbon elements in the positive active material usually also have an impact on the structure and performance of the positive active material. In combination with Table 3-2, it can be seen from embodiment 1-2 and embodiments 3-1 to 3-9 that by regulating the type and content of doping elements and the content of carbon elements in the first positive active material, and the type and content of doping elements and the content of carbon elements in the second positive active material to be within the range of the present application, it is beneficial to obtain a lithium-ion battery with a good cycle performance and a high capacity. In addition, A₁/A₂ of the lithium-ion battery in each embodiment of the present application is within the range of the present application, indicating that the lithium-ion battery has a good cycle performance.

**TABLE 3-3**

| Serial number | Average width of cracked structure (nm) | Average length of cracked structure (nm) |
|---|---|---|
| Embodiment 1-1 | 14 | 300 |
| Embodiment 1-2 | 16 | 310 |
| Embodiment 3-1 | 18 | 330 |
| Embodiment 3-2 | 15 | 308 |
| Embodiment 3-3 | 16 | 300 |
| Embodiment 3-4 | 13 | 280 |
| Embodiment 3-5 | 35 | 500 |
| Embodiment 3-6 | 15 | 320 |
| Embodiment 3-7 | 15 | 300 |
| Embodiment 3-8 | 15 | 300 |
| Embodiment 3-9 | 13 | 280 |

The type and content of doping elements and the content of carbon elements in the positive active material usually also have an impact on the cracked structure of the positive active material. Combined with Table 3-3, it can also be seen from embodiments 1-1 to 1-2 and embodiments 3-1 to 3-9 that by regulating the type and content of doping elements and the content of carbon elements in the first positive active material, and the type and content of doping elements and the content of carbon elements in the second positive active material to be within the range of the present application, it is beneficial to regulate the average width and average length of the cracked structure within the range of the present application, thereby facilitating the lithium ions inside the first positive active material particles to extract from the cracked structure, and thus replenishing the lithium ions consumed by the SEI membrane and improving the cycle performance of the lithium-ion battery.

FIG. 4 is an SEM image of the positive electrode sheet of embodiment 1-3. It can be seen from the figure that a part of the positive active material (i.e., the first positive active material) particles have a cracked structure, and the area of the first positive active material with the cracked structure accounts for about 18% of the total area of the region, which is conducive to obtaining a lithium-ion battery with a good cycle performance and a high capacity.

The above is a detailed introduction to a positive electrode sheet, a secondary battery, a battery pack and an electricity-consumption equipment disclosed in the embodiments of the present application. Specific examples are used herein to illustrate the principles and implementations of the present application. The description of the above embodiments is only used to help understand the technical solutions and core inventions of the embodiments of the present application. At the same time, for those skilled in the art, according to the ideas of the present application, there may be changes in the specific implementations and application scopes. In summary, the content of this specification should not be understood as a limitation on the present application.

## Claims

1. A positive electrode sheet, comprising a positive current collector, wherein at least one surface of the positive current collector is provided with a positive active material layer, and in any 25µm×25µm region of a cross section of the positive active material layer, a percentage of an area of a first positive active material with a cracked structure to a total area of the region is a%, 5≤*α*≤20.

2. The positive electrode sheet according to claim 1, wherein the positive active material layer further comprises a second positive active material, Dv10 of the first positive active material is greater than Dv10 of the second positive active material, Dv50 of the first positive active material is greater than Dv50 of the second positive active material, and Dv90 of the first positive active material is greater than Dv90 of the second positive active material.

3. The positive electrode sheet according to claim 2, wherein the Dv10 of the first positive active material is *b* µm, the Dv50 of the first positive active material is c µm, the Dv90 of the first positive active material is *d* µm, the Dv10 of the second positive active material is e µm, the Dv50 of the second positive active material is *f* µm, the Dv90 of the second positive active material is *g* µm, satisfying: b > 0.4, 1≤*c*≤1.6, 3≤*d*≤20, and *e*≤0.4, 0.5≤*f*≤0.7, *g*≤1.0.

4. The positive electrode sheet according to claim 2, wherein the first positive active material comprises a doping element and a carbon element, a concentration of the doping element in the first positive active material ranges from 1 ppm to 800 ppm, and a content of the carbon element in the first positive active material is *h%* by mass, 0.5≤*h* < 1.1.

5. The positive electrode sheet according to claim 2, wherein the second positive active material comprises a doping element and a carbon element, a concentration of the doping element in the second positive active material ranges from 1500 ppm to 6000 ppm, and a content of the carbon element in the second positive active material is i% by mass, 1.1≤*i*≤3.

6. The positive electrode sheet according to claim 4 or 5, wherein the doping element comprises at least one of Ti, Mg, Nb, V, W, Zr, Ta and Y.

7. The positive electrode sheet according to any one of claims 2 to 5, wherein based on a mass of the positive active material layer, a content of the first positive active material is m₁% by mass, and a content of the second positive active material is m₂% by mass, satisfying m₁/(m₁ +m₂ )≤20%.

8. The positive electrode sheet according to any one of claims 1 to 5, wherein the cracked structure has a crack with an average width from 10 nm to 200 nm and an average length from 40 nm to 5000 nm.

9. The positive electrode sheet according to any one of claims 1 to 5, wherein a 0.1C discharge test is performed on a button cell containing the first positive active material, and an initial efficiency of the button cell ranges from 96% to 98.5%.

10. The positive electrode sheet according to any one of claims 2 to 5, wherein the first positive active material and the second positive active material are selected from at least one of lithium iron phosphate and lithium manganese iron phosphate.

11. A secondary battery, comprising a positive electrode sheet according to any one of claims 1 to 10.

12. The secondary battery according to claim 11, wherein a maximum discharge capacity of the secondary battery during a cycle process is A₁ mAh, and a second cycle discharge capacity of the secondary battery during the cycle process is A₂ mAh, satisfying: 101.5%≤A₁/A₂≤106%.

13. A battery pack, comprising a case and at least a secondary battery according to claim 12, wherein the secondary battery is accommodated in the case.

14. An electricity-consumption equipment, comprising a secondary battery according to claim 12 or a battery pack according to claim 13.
